# FASCICULE DE BREVET EUROPEEN

(11) **EP 2 486 261 B1**
(45) Date de publication et mention de la délivrance du brevet: **05.06.2013**
(21) Numéro de dépôt: 10776770.9
(22) Date de dépôt: 30.09.2010
(51) Int. Cl.: F02C 7/236, F02C 9/26, F02C 9/48, F02K 1/17

(54) **CIRCUIT D'ALIMENTATION EN CARBURANT D'UN MOTEUR D'AERONEF**
SCHALTUNG ZUR ZUFÜHRUNG VON KRAFTSTOFF AN EIN FLUGZEUGTRIEBWERK
CIRCUIT FOR SUPPLYING FUEL TO AN AIRCRAFT ENGINE

(30) Priorité: 06.10.2009 FR 0956952
(43) Date de publication de la demande: 15.08.2012
(73) Titulaire: SNECMA, 75015 Paris (FR)
(72) Inventeur: BADER, Nicolas, Alain, F-77000 Vaux Le Penil (FR); BRETTES, Frédéric, F-77310 Boissise Le Roi (FR); DORE, Bastien, F-75012 Paris (FR); HODINOT, Laurent, Gilbert, Yves, F-77240 Cesson (FR)
(74) Mandataire: Boura, Olivier
(86) Numéro de dépôt international: PCT/FR2010/052064
(87) Numéro de publication internationale: WO 2011/042642

(56) Documents cités:
- EP-A1- 0 145 636
- US-A1- 2004 011 052
- US-B2- 7 234 293

## Description

### Arrière-plan de l'invention

L'invention concerne un circuit d'alimentation en carburant d'un moteur d'aéronef, et plus particulièrement un circuit délivrant du carburant pour l'alimentation d'injecteurs de chambre de combustion du moteur et pour l'utilisation comme fluide hydraulique pour la commande d'actionneurs de géométries variables du moteur.

Le plus souvent, un circuit d'alimentation en carburant d'un moteur d'aéronef comprend un système de pompage constitué d'une pompe basse pression associée à une pompe haute pression. La pompe haute pression se présente généralement sous forme d'une pompe volumétrique à engrenages dont la cylindrée est fixe et qui est entraînée par le moteur via une boîte de transmission ou boîte de relais d'accessoires (ou encore AGB pour « Accessories Gear Box »). Cette pompe a pour fonction de délivrer du carburant sous haute pression vers les injecteurs de chambre de combustion et les actionneurs de géométries variables du moteur.

Le débit de carburant délivré n'est cependant pas adapté aux besoins réels du moteur sur tous les points de fonctionnement et excède celui-ci sur une large plage de régime de rotation du moteur. Le débit de carburant non consommé par le circuit de carburant lors de ces régimes de rotation du moteur est alors recirculé en amont de la pompe haute pression. Or, cette recirculation induit un échauffement du carburant et prélève de la puissance mécanique par la pompe qui n'est pas utile pour la poussée du moteur.

Pour remédier à ce problème, il est connu de recourir à des pompes haute pression à double étage, c'est-à-dire des pompes qui présentent deux étages d'engrenages qui sont entraînés simultanément par le moteur selon des lois de cylindrée différentes. Avec ce type d'architecture, la pompe haute pression fonctionne préférentiellement sur un seul étage lorsque les points de vol nécessitent peu de cylindrée. Dans ce cas, le débit de l'autre pompe est entièrement recirculé en conservant un faible chargement en pression, diminuant ainsi la puissance mécanique prélevée sur cet étage. Lorsque les points de vol nécessitent plus de cylindrée, la seconde pompe est activée.

Le document US 7,234,293 divulgue un exemple d'une pompe haute pression à double étage. En particulier, ce document décrit système de commutation entre les configurations à un et deux étages basé sur une modification de la soupape de régulation qui est à double section de recirculation (une pour chaque étage de la pompe haute pression). Or, ce type de commutation introduit des perturbations sur le débit dosé de carburant qui sont particulièrement préjudiciables à la précision de ce débit dosé.

### Objet et résumé de l'invention

La présente invention a donc pour but principal de pallier de tels inconvénients en proposant un système de commutation pour une pompe haute pression à double étage permettant de commuter entre les configurations à un et deux étages sans affecter la précision du débit dosé.

Ce but est atteint grâce à un circuit d'alimentation en carburant d'un moteur d'aéronef, comportant un système de pompage basse pression relié à un système de pompage haute pression par une ligne d'alimentation à basse pression, le système de pompage haute pression ayant une première et une seconde pompes volumétriques entraînées simultanément par le moteur pour délivrer en sortie du carburant sous haute pression vers des injecteurs de chambre de combustion et des actionneurs de géométries variables du moteur,
un actionneur hydraulique ayant un orifice d'alimentation relié à la sortie de la première pompe, un orifice d'utilisation haute pression relié à la sortie de la seconde pompe, et un orifice d'utilisation basse pression relié à la ligne d'alimentation à basse pression par une conduite de recirculation de carburant, l'orifice d'alimentation pouvant être relié à l'orifice d'utilisation haute pression ou à l'orifice d'utilisation basse pression en fonction de la position d'un tiroir de l'actionneur ; et caractérisé en qu'il comprend en outre :
un doseur de carburant comprenant un tiroir pouvant coulisser dans un cylindre et portant trois portées partageant le volume interne du cylindre en deux chambres de commande situées aux extrémités du cylindre et reliées à une servovalve et deux sections de passage situées entre les portées, l'une des sections de passage étant reliée à la sortie du système de pompage haute pression et débouchant vers les injecteurs de chambre de combustion, l'autre section de passage étant reliée à la sortie du système de pompage haute pression et débouchant dans une chambre haute pression de pilotage de l'actionneur hydraulique, l'actionneur ayant en outre une chambre basse pression de pilotage qui est reliée à la conduite de recirculation de carburant, les pressions appliquées dans les chambres de pilotage de l'actionneur agissant en opposition l'une de l'autre pour commander le déplacement du tiroir de l'actionneur.

Le contrôle de la pression dans les chambres de pilotage de l'actionneur hydraulique permet de réaliser les commutations du système de pompage haute pression entre la configuration à une seule pompe et la configuration à deux pompes. Plus précisément, la position du tiroir de l'actionneur hydraulique détermine la configuration à une ou deux pompes du système de pompage haute pression. Aussi, ces commutations ne nécessitent aucune modification de la soupape de régulation. Il en résulte que la précision de dosage du carburant n'est que peu affectée lors de ces commutations. La stabilité du débit injecté s'en trouve améliorée.

Avec un tel circuit, la configuration du système de pompage haute pression à deux pompes est commandée lorsque la vitesse de rotation du turboréacteur est faible (ce qui correspond aux points de fonctionnement de rallumage et d'autorotation ou « windmilling ») et lorsque le débit de carburant injecté est élevé (ce qui correspond aux points de fonctionnement de décollage et de montée). Quant à la configuration à une seule pompe, elle est commandée pour les autres points de fonctionnement du moteur, notamment pour les points de fonctionnement entre le ralenti et la croisière.

De préférence, la chambre haute pression de pilotage de l'actionneur hydraulique communique avec une chambre intermédiaire de pilotage reliée au circuit d'alimentation en carburant en amont du système de pompage basse pression et dans laquelle est positionné un ressort.

De préférence également, le circuit d'alimentation en carburant comprend en outre une ligne de recirculation de carburant reliant la sortie du système de pompage haute pression à la ligne d'alimentation à basse pression, et une soupape de régulation positionnée sur la ligne de recirculation de carburant.

De préférence encore, un clapet anti-retour est positionné entre l'orifice d'utilisation haute pression de l'actionneur hydraulique et la sortie de la seconde pompe.

L'invention concerne également un moteur d'aéronef comportant un circuit d'alimentation en carburant tel que défini précédemment.

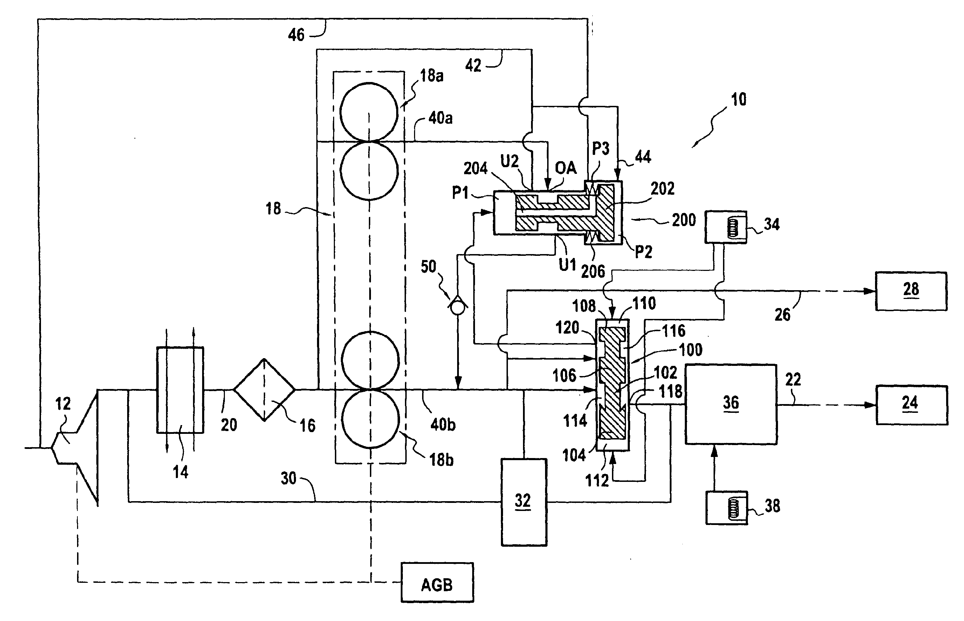

### Brève description du dessin

D'autres caractéristiques et avantages de la présente invention ressortiront de la description faite ci-dessous, en référence à la figure unique annexée qui illustre un exemple de réalisation d'un circuit d'alimentation en carburant conforme à l'invention dépourvu de tout caractère limitatif.

### Description détaillée d'un mode de réalisation

Un circuit d'alimentation en carburant conforme à l'invention est décrit ci-après dans le cadre d'une application à un moteur d'avion à turbine à gaz. Toutefois, le domaine d'application de l'invention s'étend à des moteurs à turbine à gaz d'autres aéronefs, notamment des hélicoptères et à des moteurs d'aéronefs autres qu'à turbine à gaz.

Le circuit d'alimentation en carburant 10 comporte un système de pompage basse pression 12, un échangeur thermique carburant/huile 14, un filtre principal à carburant 16 et un système de pompage haute pression 18.

Le système de pompage basse pression 12 est relié en amont aux réservoirs de carburant de l'avion (non représentés) et en aval au système de pompage haute pression 18 par l'intermédiaire d'une ligne d'alimentation à basse pression 20.

A la sortie du système de pompage haute pression 18, le circuit d'alimentation en carburant 10 se divise en plusieurs lignes distinctes de carburant, à savoir : une ligne de carburant 22 pour l'alimentation en carburant d'injecteurs de chambre de combustion 24 ; une autre ligne de carburant 26 pour l'alimentation d'actionneurs 28 de géométries variables du moteur ; et une ligne de recirculation de carburant 30 munie d'une soupape de régulation 32 pour renvoyer le débit de carburant non utilisé sur la ligne d'alimentation à basse pression 20 en amont de l'échangeur thermique 14.

De façon connue en soi, la ligne de carburant 22 pour l'alimentation en carburant des injecteurs de chambre de combustion 24 comprend également un doseur de carburant 100 (détaillé ultérieurement) commandé par une servovalve 34, et un clapet de pressurisation 36 également commandé par une servovalve 38 pour les fonctions de coupure.

Le système de pompage haute pression 18 de ce circuit est du type à deux étages, c'est-à-dire qu'il se compose de deux pompes volumétriques à engrenages 18a, 18b qui sont entraînées simultanément par le moteur selon des lois de cylindrée différentes. Plus précisément, la première pompe 18a présente une cylindrée plus élevée que celle de la seconde pompe 18b, c'est-à-dire qu'elle permet en fonctionnement d'injecter un débit de carburant plus important que celui injecté en fonctionnement par la seconde pompe. En d'autres termes, la première pompe 18a du système de pompage haute pression a une capacité de pompage supérieure à celle de la seconde pompe 18b.

Le système de pompage basse pression 12, ainsi que les deux pompes 18a, 18b du système de pompage haute pression 18 sont entraînées simultanément par l'arbre haute pression du moteur via une boîte de transmission AGB (ou boîte de relais d'accessoires).

Selon l'invention, le circuit d'alimentation en carburant 10 comprend également un actionneur hydraulique 200 qui est interposé entre les sorties respectives 40a, 40b des deux pompes 18a, 18b du système de pompage haute pression et qui peut prendre deux positions différentes : une première position dans laquelle les sorties 40a, 40b des deux pompes communiquent entre elles pour combiner leurs débits en vue de délivrer du carburant sous haute pression vers les injecteurs de chambre de combustion 24 et les actionneurs de géométries variables 28, et une seconde position dans laquelle la sortie 40a de la première pompe 18a communique avec une conduite de recirculation de carburant 42 pour décharger l'ensemble du débit de sortie de la première pompe vers la ligne d'alimentation à basse pression 20.

De façon plus précise, l'actionneur hydraulique 200 comprend un tiroir 202 mobile en translation linéaire dans un cylindre. L'actionneur 200 comprend également un orifice d'alimentation OA relié à la sortie 40a de la première pompe 18a, un orifice d'utilisation haute pression U1 relié à la sortie 40b de la seconde pompe 18b, et un orifice d'utilisation basse pression U2 relié à la ligne d'alimentation à basse pression 20 par la conduite de recirculation de carburant 42, l'orifice d'alimentation OA pouvant être relié à l'orifice d'utilisation haute pression U1 ou à l'orifice d'utilisation basse pression U2 en fonction de la position du tiroir 202 de l'actionneur.

Ainsi, la position du tiroir 202 de l'actionneur hydraulique définit les deux positions précédemment décrites : dans la première position, l'orifice d'alimentation OA est relié à l'orifice d'utilisation haute pression U1 de sorte que les sorties 40a, 40b des deux pompes communiquent entre elles, et l'orifice d'utilisation basse pression U2 est masqué ; dans la seconde position, l'orifice d'alimentation OA communique avec l'orifice d'utilisation basse pression U2 pour permettre une recirculation du carburant vers la ligne d'alimentation à basse pression 20 via la conduite de recirculation 42, et l'orifice d'utilisation haute pression U1 est masqué.

L'actionneur hydraulique comprend encore trois chambres de pilotage, à savoir : une chambre de pilotage haute pression P1 reliée au doseur de carburant 100, une chambre de pilotage basse pression P2 reliée à la conduite de recirculation de carburant 42 via une conduite de dérivation 44, et une chambre intermédiaire de pilotage P3 reliée au circuit d'alimentation en carburant en amont du système de pompage basse pression 12 via une ligne de carburant 46. Par ailleurs, les chambres de pilotage P1 et P3 communiquent entre elles au moyen d'un canal 204 pratiqué dans le tiroir 202 de l'actionneur. En outre, un ressort 206 est logé dans la chambre intermédiaire de pilotage P3.

La variation de la pression à l'intérieur de ces trois chambres de pilotage P1 à P3 de l'actionneur permet de commander le déplacement du tiroir 202 dans le cylindre pour le positionner dans les deux positions décrites précédemment. En particulier, le doseur de carburant 100 qui est relié à la chambre de pilotage haute pression P1 de l'actionneur permet de faire varier la pression dans cette chambre.

A cet effet, le doseur de carburant 100 comprend un tiroir 102 pouvant coulisser dans un cylindre et portant trois portées 104, 106 et 108. Les portées partagent le volume interne du cylindre en deux chambres de commande 110, 112 situées aux extrémités du cylindre et sections de passage 114, 116 situées entre les portées. Les chambres de commande 110, 112 sont reliées à la servovalve 34 par des lignes de commande.

La section de passage 114 délimitée entre les portées 104 et 106 est reliée à la sortie du système de pompage haute pression 18 et débouche par un orifice d'utilisation 118 vers les injecteurs de chambre de combustion 24. Le degré d'obturation de l'orifice d'utilisation 118 par la portée 104 détermine le débit de carburant dosé.

Quant à l'autre section de passage 116, elle est également reliée à la sortie du système de pompage haute pression 18 et débouche par un orifice d'utilisation 120 dans la chambre haute pression de pilotage P1 de l'actionneur hydraulique 200.

Les différentes commutations du système de pompage haute pression entre les configurations à une et deux pompes s'effectuent de la manière suivante.

Pour les points de fonctionnement du moteur à bas régime où la configuration à deux pompes est nécessaire, la servovalve 34 agit sur les pressions dans les chambres de commande 110, 112 du doseur de carburant 100 pour que l'orifice d'utilisation 120 du doseur soit complètement masqué. La pression dans la chambre de pilotage haute pression P1 de l'actionneur 200 est donc proche de la pression P_{CA} de la ligne du circuit d'alimentation en carburant en amont du système de pompage basse pression 12 (car elle y est reliée via la chambre intermédiaire de pilotage P3 et la ligne de carburant 46).

Dans la chambre de pilotage basse pression P2 de l'actionneur qui est reliée à la conduite de recirculation de carburant 42, la pression P_{BP} qui y règne correspond à la pression en sortie du système de pompage basse pression 12. Par ailleurs, le ressort 206 positionné dans la chambre intermédiaire de pilotage P3 de l'actionneur est dimensionné pour contrer l'effort de la pression P_{BP} du carburant dans la chambre de pilotage P2.

Ainsi, sous l'effet de ces différentes pressions, le tiroir 202 de l'actionneur 200 se déplace dans la première position où les sorties 40a, 40b des deux pompes 18a, 18b du système de pompage haute pression communiquent entre elles pour combiner leurs débits.

Pour les points intermédiaires de fonctionnement du moteur où la configuration à une seule pompe est privilégiée (commutation basse), la servovalve 34 agit sur les pressions dans les chambres de commande 110, 112 du doseur de carburant 100 pour que l'orifice d'utilisation 120 du doseur soit complètement masqué. La pression dans la chambre de pilotage haute pression P1 de l'actionneur 200 est donc toujours proche de la pression P_{CA}.

Par ailleurs, la pression en sortie du système de pompage basse pression 12 augmente (par rapport aux points de fonctionnement à bas régime) de sorte que la pression P_{BP} qui règne à l'intérieur de la chambre de pilotage basse pression P2 vient contrer l'effort exercé par le ressort 206 positionné dans la chambre intermédiaire de pilotage P3.

Ainsi, sous l'effet de ces différentes pressions, le tiroir 202 de l'actionneur 200 se déplace dans la seconde position où le débit de sortie de la première pompe 18a est déchargé vers la ligne d'alimentation à basse pression 20.

Pour les points de fonctionnement à fort débit dosé où la configuration à deux pompes est nécessaire (commutation haute), la servovalve 34 agit sur les pressions dans les chambres de commande 110, 112 du doseur de carburant 100 pour que l'orifice d'utilisation 120 du doseur soit découvert de sorte que la pression qui règne dans la chambre de pilotage haute pression P1 de l'actionneur corresponde à la pression haute pression P_{HP} en sortie de la seconde pompe 18b.

Cette pression P_{HP} élevée est supérieure à la pression P_{BP} qui règne dans la chambre de pilotage basse pression P2 de l'actionneur, cette dernière étant toujours en communication avec la ligne d'alimentation à basse pression 20.

Ainsi, sous l'effet de ces différentes pressions, le tiroir 202 de l'actionneur 200 se déplace dans la première position où les sorties 40a, 40b des deux pompes 18a, 18b du système de pompage haute pression communiquent entre elles pour combiner leurs débits.

Selon une caractéristique avantageuse de l'invention, un clapet anti-retour 50 est positionné sur la ligne de carburant reliant l'orifice d'utilisation haute pression U1 de l'actionneur hydraulique 200 à la sortie 40b de la seconde pompe 18b. Ce clapet anti-retour permet d'éviter les appels de débit par l'actionneur lors de commutations.

On notera que la conduite de recirculation de carburant 42 peut déboucher sur la ligne d'alimentation à basse pression 20, soit en amont de l'échangeur thermique 14, soit entre l'échangeur thermique 14 et le filtre principal à carburant 16, soit en aval de ce filtre principal à carburant (en amont du partage entre les entrées des deux pompes 18a, 18b du système de pompage haute pression ou en amont de l'entrée de la première pompe 18a comme représenté sur la figure unique).

On notera également que l'actionneur hydraulique peut ne pas comprendre de chambre intermédiaire reliée au circuit de carburant en amont du système de pompage basse pression comme décrit ci-dessus. Dans cette variante non illustrée, le ressort est alors logé dans la chambre de pilotage haute pression P1.

On notera encore que les pompes volumétriques du système de pompage haute pression ne sont pas nécessairement à engrenages mais qu'elles pourraient être du type à palettes.

## Revendications

1. Circuit d'alimentation en carburant (10) d'un moteur d'aéronef, comportant un système de pompage basse pression (12) relié à un système de pompage haute pression (18) par une ligne d'alimentation à basse pression (20), le système de pompage haute pression ayant une première et une seconde pompes volumétriques (18a, 18b) entraînées simultanément par le moteur pour délivrer en sortie du carburant sous haute pression vers des injecteurs de chambre de combustion (24) et des actionneurs (28) de géométries variables du moteur,
un actionneur hydraulique (200) ayant un orifice d'alimentation (OA) relié à la sortie (40a) de la première pompe (18a), un orifice d'utilisation haute pression (U1) relié à la sortie (40b) de la seconde pompe (18b), et un orifice d'utilisation basse pression (U2) relié à la ligne d'alimentation à basse pression par une conduite de recirculation de carburant (42), l'orifice d'alimentation pouvant être relié à l'orifice d'utilisation haute pression ou à l'orifice d'utilisation basse pression en fonction de la position d'un tiroir (202) de l'actionneur ; et caractérisé en qu'il comprend en outre :
un doseur de carburant (100) comprenant un tiroir (102) pouvant coulisser dans un cylindre et portant trois portées (104, 106, 108) partageant le volume interne du cylindre en deux chambres de commande (110, 112) situées aux extrémités du cylindre et reliées à une servovalve (34) et deux sections de passage (114, 116) situées entre les portées, l'une des sections de passage (114) étant reliée à la sortie du système de pompage haute pression et débouchant vers les injecteurs de chambre de combustion, l'autre section de passage (116) étant reliée à la sortie du système de pompage haute pression et débouchant dans une chambre haute pression de pilotage (P1) de l'actionneur hydraulique, l'actionneur ayant en outre une chambre basse pression de pilotage (P2) qui est reliée à la conduite de recirculation de carburant, les pressions appliquées dans les chambres de pilotage de l'actionneur agissant en opposition l'une de l'autre pour commander le déplacement du tiroir de l'actionneur.

2. Circuit selon la revendication 1, caractérisé en que la chambre haute pression de pilotage (P1) de l'actionneur hydraulique (200) communique avec une chambre intermédiaire de pilotage (P3) reliée au circuit d'alimentation en carburant en amont du système de pompage basse pression et dans laquelle est positionné un ressort (206).

3. Circuit selon l'une des revendications 1 et 2, **caractérisé en ce qu'**il comprend en outre une ligne de recirculation de carburant (30) reliant la sortie du système de pompage haute pression à la ligne d'alimentation à basse pression (20), et une soupape de régulation (32) positionnée sur la ligne de recirculation de carburant.

4. Circuit selon l'une quelconque des revendications 1 à 3, **caractérisé en ce qu'**un clapet anti-retour (50) est positionné entre l'orifice d'utilisation haute pression (U1) de l'actionneur hydraulique (200) et la sortie (40b) de la seconde pompe (18b).

5. Circuit selon l'une quelconque des revendications 1 à 4, **caractérisé en ce que** la première pompe (18a) a une capacité de pompage supérieure à celle de la seconde pompe (18b).

6. Moteur d'aéronef comportant un circuit d'alimentation en carburant (10) selon l'une quelconque des revendications 1 à 5.

## Patentansprüche

1. Treibstoffzuführkreis (10) eines Flugzeugtriebwerks, umfassend ein Niederdruckpumpsystem (12), das über eine Niederdruckversorgungsleitung (20) mit einem Hochdruckpumpsystem (18) verbunden ist, wobei das Hochdruckpumpsystem eine erste und eine zweite volumetrische Pumpe (18a, 18b) aufweist, die durch das Triebwerk gleichzeitig angetrieben werden, um ausgangseitig Treibstoff unter hohem Druck an Brennkammereinspritzdüsen (24) und Aktoren (28) mit veränderlichen Geometrien, des Triebwerks zu liefern,
wobei ein hydraulischer Aktor (200) eine Zuführöffnung (OA), welche mit dem Ausgang (40a) der ersten Pumpe (18a) verbunden ist, eine Hochdrucknutzungsöffnung (U1), welche mit dem Ausgang (40b) der zweiten Pumpe (18b) verbunden ist, sowie eine Niederdrucknutzungsöffnung (U2), welche über eine Treibstoffrückführleitung (42) mit der Niederdruckversorgungsleitung verbunden ist, umfaßt, wobei die Zuführöffnung in Abhängigkeit von der Position eines Schiebers (202) des Aktors mit der Hochdrucknutzungsöffnung oder mit der Niederdrucknutzungsöffnung verbunden sein kann, und
**dadurch gekennzeichnet, daß** er ferner umfaßt:
eine Treibstoffdosiereinrichtung (100), die einen Schieber (102) umfaßt, der in einem Zylinder gleiten kann und drei Auskragungen (104, 106, 108) trägt, die das Innenvolumen des Zylinders in zwei Steuerkammern (110, 112), welche an den Enden des Zylinders gelegen und mit einem Servoventil (34) verbunden sind, sowie zwei zwischen den Auskragungen gelegene Durchgangsabschnitte (114, 116) teilt, wobei der eine der Durchgangsabschnitte (114) mit dem Ausgang des Hochdruckpumpsystems verbunden ist und in Richtung der Brennkammereinspritzdüsen mündet, wobei der andere Durchgangsabschnitt (116) mit dem Ausgang des Hochdruckpumpsystems verbunden ist und in eine Hochdrucksteuerkammer (P1) des hydraulischen Aktors mündet, wobei der Aktor ferner eine Niederdrucksteuerkammer (P2) aufweist, die mit der Treibstoffrückführleitung verbunden ist, wobei die in den Steuerkammern des Aktors angelegten Drücke entgegengesetzt zueinander wirken, um die Bewegung des Schiebers des Aktors zu steuern.

2. Kreis nach Anspruch 1, **dadurch gekennzeichnet, daß** die Hochdrucksteuerkammer (P1) des hydraulischen Aktors (200) mit einer Zwischensteuerkammer (P3), die mit dem Treibstoffzuführkreis vor dem Niederdruckpumpsystem verbunden ist und in der eine Feder (206) angeordnet ist, in Verbindung ist.

3. Kreis nach einem der Ansprüche 1 und 2, **dadurch gekennzeichnet, daß** er ferner eine Treibstoffrückführleitung (30), welche den Ausgang des Hochdruckpumpsystems mit der Niederdruckversorgungsleitung (20) verbindet, sowie ein Regelventil (32), das an der Treibstoffrückführleitung angeordnet ist, umfaßt.

4. Kreis nach einem der Ansprüche 1 bis 3, **dadurch gekennzeichnet, daß** ein Rückschlagventil (50) zwischen der Hochdrucknutzungsöffnung (U1) des hydraulischen Aktors (200) und dem Ausgang (40b) der zweiten Pumpe (18b) angeordnet ist.

5. Kreis nach einem der Ansprüche 1 bis 4, **dadurch gekennzeichnet, daß** die erste Pumpe (18a) eine größere Pumpkapazität als die zweite Pumpe (18b) aufweist.

6. Flugzeugtriebwerk, umfassend einen Treibstoffzuführkreis (10) nach einem der Ansprüche 1 bis 5.

## Claims

1. A fuel feed circuit (10) for an aeroengine, the circuit comprising a low-pressure pumping system (12) connected to a high-pressure pumping system (18) by a low-pressure feed line (20), the high-pressure pumping system having first and second positive displacement pumps (18a, 18b) driven simultaneously by the engine in order to deliver fuel at high pressure to combustion chamber injectors (24) and to actuators (28) for actuating variable-geometry members of the engine,
a hydraulic actuator (200) having a feed orifice (OA) connected to the outlet (40a) of the first pump (18a), a high-pressure delivery orifice (U1) connected to the outlet (40b) of the second pump (18b), and a low-pressure delivery orifice (U2) connected to the low-pressure feed line by a fuel return pipe (42), the feed orifice being capable of being connected to the high-pressure delivery orifice or to the low-pressure delivery orifice as a function of the position of a slide (202) of the actuator; and the fuel feed circuit being **characterized in that** it further comprises:
a fuel metering unit (100) having a slide (102) capable of sliding in a cylinder and carrying three bearing surfaces (104, 106, 108) subdividing the inside volume of the cylinder into two control chambers (110, 112) situated at the ends of the cylinder and connected to a servo-valve (34), and two through sections (114, 116) situated between the bearing surfaces, one of the through sections (114) being connected to the outlet of the high-pressure pumping system and leading to the combustion chamber injectors, the other through section (116) being connected to the outlet from the high-pressure pumping system and leading to a high-pressure pilot chamber (P1) of the hydraulic actuator, the actuator also having a low-pressure pilot chamber (P2) that is connected to the fuel return pipe, the pressures applied in the pilot chambers of the actuator opposing each other in order to control the movement of the slide of the actuator.

2. A circuit according to claim 1, **characterized in that** the high-pressure pilot chamber (P1) of the hydraulic actuator (200) communicates with an intermediate pilot chamber (P3) connected to the fuel feed circuit upstream from the low-pressure pumping system, and having a spring (206) located therein.

3. A circuit according to claim 1 or claim 2, **characterized in that** it further includes a fuel return line (30) connecting the outlet from the high-pressure pumping system to the low-pressure feed line (20), and a regulator valve (32) positioned on the fuel return line.

4. A circuit according to any one of claims 1 to 3, **characterized in that** a check valve (50) is positioned between the high-pressure delivery orifice (U1) of the hydraulic actuator (200) and the outlet (40b) of the second pump (18b).

5. A circuit according to any one of claims 1 to 4, **characterized in that** first pump (18a) has pumping capacity greater than that of the second pump (18b).

6. An aeroengine including a fuel feed circuit (10) according to any one of claims 1 to 5.
